# EUROPEAN PATENT APPLICATION

(11) **EP 1 835 398 A1**
(43) Date of publication of application: **19.09.2007**
(21) Application number: 07102430.1
(22) Date of filing: 15.02.2007
(51) Int. Cl.: G06F 9/44

(54) **Frequency converter controller, peripheral device, method and program**

(30) Priority: 15.03.2006 FI 20065165
(71) Applicant: ABB Oy, 00380 Helsinki (FI)
(72) Inventor: Rantanen, Jussi, 02620, Espoo (FI); Jaatinen, Juhana, 05800, Hyvinkää (FI); Tamminiemi, Petri, 08800, Kirkniemi (FI)
(74) Representative: Holmström, Stefan Mikael

(57) **Abstract**

The invention relates to a controller (1) of a frequency converter. In order to avoid compatibility problems the controller (1) of the frequency converter comprises a memory (4), in which control programs (11 to 14) of peripheral devices (101 to 103) connectable to the controller are stored; and a compatibility table (15); a check element (3), which by utilizing the memory (4) checks specifically for each peripheral device (101 to 103) whether a compatible control program is stored in a memory (9) of the peripheral device; and an update element (2), which, if need, be retrieves the control program (11 to 14) of the peripheral device from the memory (4) of the controller (1) and sends it to the peripheral device to be used if the control program (11 to 14) stored in the memory (4) is, on the basis of the hardware identifier and the compatibility table (15), compatible.

## Description

### FIELD OF THE INVENTION

This invention relates to a frequency converter and particularly to ensuring the interaction of its controller and peripheral devices during the life span of the frequency converter.

### DESCRIPTION OF PRIOR ART

In accordance with prior art, frequency converters are programmed in connection with their manufacture in such a way that a control program suitable for the purpose is fed to the controller of a frequency converter and each peripheral device. Since the same frequency converter model may be manufactured during a long period of time, the same frequency converter is, as a rule, produced as different versions at different times. For example, there may be differences in peripheral devices of frequency converters, which may be a result of new device generations of corresponding peripheral devices, to which some improvements have been made. Alternatively, a frequency converter type having been in production for long may be subjected to such a change that a completely new peripheral device is added to the frequency converters being manufactured later. There may also be differences in control programs of peripheral devices of frequency converters, for instance. In such a case, frequency converters of a particular type, manufactured later, may have control programs different from the programs of converters of this same type manufactured earlier.

Development of the frequency converter type mentioned above has the problem that, as a rule, converters of the same type may be different from each other, which results in practical problems with regard to their maintenance. There is a risk here that in connection with maintenance or updating operations such a peripheral device or spare part is changed or added to the frequency converter which is not compatible with other parts of the frequency converter, or the control program of which is not compatible with other parts of the converter.

### SUMMARY OF THE INVENTION

An object of this invention is to solve the above problem and to provide a solution which alleviates compatibility problems and by means of which the possible disadvantages of incompatible peripheral devices and control programs can be eliminated. This object can be achieved with a controller of a frequency converter according to independent claim 1, a peripheral device according to independent claim 4, a method according to independent claim 5 and a program according to independent claim 8.

The invention utilizes a memory in which the control programs of peripheral devices connectable to the controller of a frequency converter as well as a compatibility table are stored. The set of control programs and the compatibility table can be stored in a load packet. The controller of the frequency converter is thus capable of checking on the basis of the hardware identifiers of the peripheral devices and of the version identifiers of the control programs whether the peripheral devices connected to it are compatible. If it turns out that one of the peripheral devices does not have a compatible control program available, the controller is capable of retrieving one from the memory and sending it to be used by the peripheral device. The problems caused by incompatible programs and peripheral devices can thus be minimized.

Preferred embodiments of the controller, method and program according to the invention become apparent from the attached dependent claims 2 to 3, 6 to 7 and 9.

### BRIEF DESCRIPTION OF THE DRAWINGS

The invention will be described in the following by way of example, referring to the attached figures, of which:
Figure 1 shows a block diagram of a first embodiment of the invention;
Figure 2 shows a load packet that can be utilized in connection with the invention; and
Figure 3 shows a flow chart of a first preferred embodiment of the method according to the invention.

### DESCRIPTION OF AT LEAST ONE EMBODIMENT OF THE INVENTION

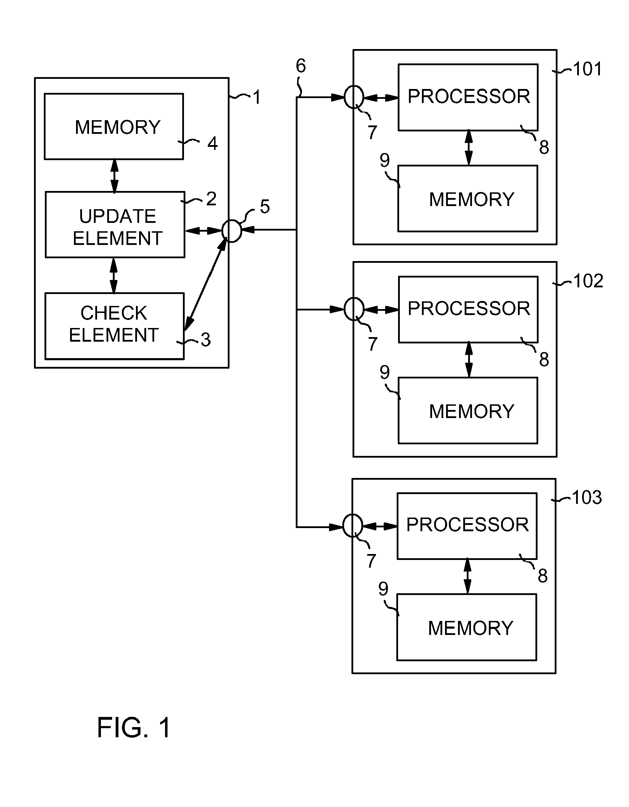

Figure 1 shows a block diagram of a first embodiment of the invention.

Figure 1 shows a controller 1 of a frequency converter, comprising in accordance with the invention an update element 2 and a check element 3. In practice, the controller itself as well as the update element 2 and check element 3 can be implemented with a processor and a computer program, for example. The controller 1 also comprises a memory 4, in which the control programs of the peripheral devices connectable to the controller 1 of the frequency converter are stored. These control programs stored in the memory 4 are such program versions that their compatibility has been ensured beforehand. The memory 4 may, in practice, be formed of for instance a memory circuit, a hard disk or another mass memory suitable for the purpose.

The controller 1 comprises an interface 5, via which the controller is connected to a bus 6 connecting the controller 1 and the peripheral devices 101 to 103 of the frequency converter. The number and type of the peripheral devices may vary case-specifically. In the following it is assumed, by way of example, that the peripheral device 101 is a user interface comprising, in addition to a processor 8 and a memory 9, a display and a keyboard. In the memory 9, a control program is stored with which the processor 8 executes functions related to the operation of the frequency converter, in other words in the case of a user interface it receives information fed by the user and transmits information intended for the user to the display.

Correspondingly, the peripheral devices 102 and 103 comprise processors 8 and memories 9, in which peripheral-device-specific control programs are stored, by means of which the processors of the peripheral devices in question execute functions related to the operation of the frequency converter. The memories 9 may be separate from the processors 8 or integrated into the processors. The peripheral devices 102 and 103 may, in practice, be formed of a field bus adapter and a speed measurement module.

In order for the frequency converter to operate in the correct manner, the control programs stored in its peripheral devices must be compatible with each other and also compatible with the control program of the controller 1. To ensure this the check element 3 is, in certain situations, arranged to check that control programs stored in the memories 9 of the peripheral devices 101 to 103 are, on the basis of a compatibility table, compatible. To implement this, the check element 3 starts a check process, in which it goes through all peripheral devices by sending a message to them via the interface 5 and the bus 6, commanding the peripheral devices to inform the controller 1 about the version identifier of the control program and, in addition, about the hardware identifier of the peripheral devices.

When it receives this information from one of the peripheral devices, the check element 3 compares it with the information indicated by the compatibility table. If the version identifier of the control program is not compatible on the basis of the compatibility table, the update element 2 is activated. The update element 2 checks the hardware identifier received from the peripheral device and finds out on the basis of the compatibility table whether the device version of the peripheral device is such that the control program stored in the memory 4 for the peripheral device in question functions in this peripheral device. If the check shows that it functions, the update element 2 sends the control program stored in the memory 4 to be used by the peripheral device. The peripheral device receiving the control program and the control command stores the control program in its memory to be used during the operation of the peripheral device. The control program already in the memory of the peripheral device may remain in the memory, from where it can be activated later on, or alternatively the peripheral device may remove the control program already in the memory.

In accordance with the invention, the controller 1 may be configured to check, at every attempt to start the frequency converter, the compatibility of the control programs of the peripheral devices. Such a check relating to a start attempt may be implemented for instance every time the controller 1 is switched on. Thus, the controller 1 for instance prevents the control of the frequency converter and engine rotation until confirmation has been received of the compatibility of the control programs for all peripheral devices. Only then will the controller allow the control of the frequency converter and the rotation of the engine. Alternatively, the controller 1 may be configured to carry out the above-mentioned check and possibly the required updating in response to the control command given by the user via the user interface 101. Such a control command may be given to the frequency converter for instance by initializing the frequency converter at the same time as the reset key included in the user interface is pressed.

With reference to Figure 1, it is assumed above that the check element 3 of the controller starts a check process in which it sends all peripheral devices a message commanding the peripheral devices to inform the controller 1 about the version identifier of the control program in use as well as about the version identifiers of the peripheral devices. Deviating from this, it is also thinkable in accordance with the invention that one or more peripheral devices could be configured to automatically send these identifiers to the check element 3 in predetermined cases. In such a case, the check element 3 only goes through the identifiers received from different peripheral devices one after the other and compares them with the information indicated by the compatibility table. The update element 2, in turn, attends to the updating, as described above.

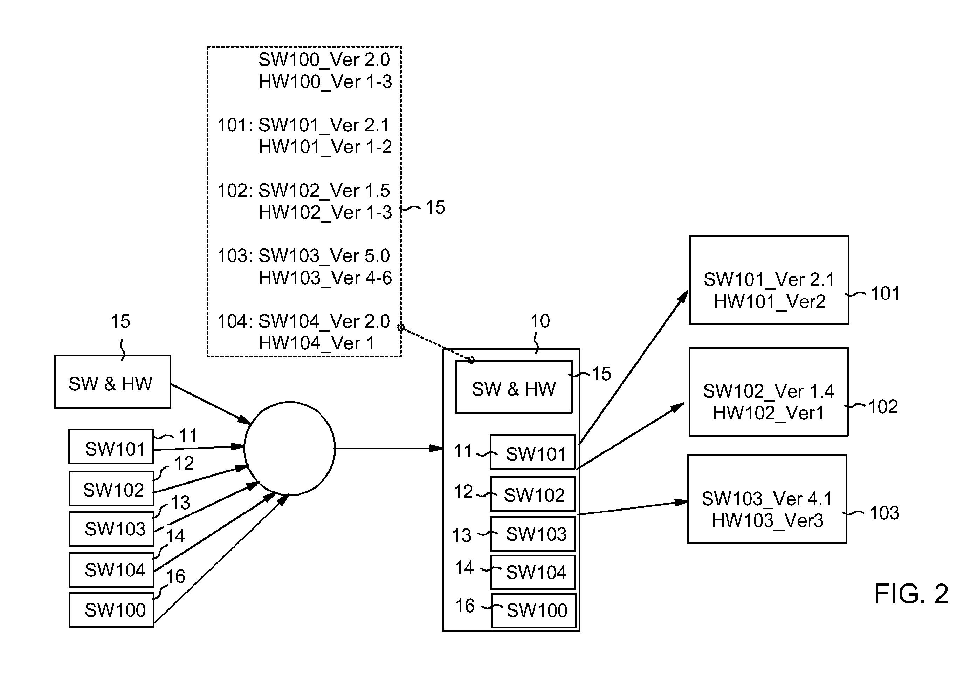

Figure 2 shows a load packet 10 that can be utilized in connection with the invention. A load packet refers, in this context, to a data entity suitable to be stored in the memory of a frequency converter and comprising a compatibility table 15 and control programs 11 to 14 of peripheral devices connectable to the controller of the frequency converter. In accordance with the invention, the load packet 10 may also include a control program 16 (SW100) of the controller, and correspondingly, the compatibility table 15 may include compatibility information concerning the control program of the controller.

In connection with the manufacture of a frequency converter, those software versions 11 to 14 and 16 are selected which are to be included in the load packet 10 of the frequency converter. Hence, only such program versions are selected the compatibility of which has been ensured. At the same time, a compatibility table 15 is generated, on the basis of which the controller can ensure that no compatibility problems will arise. In accordance with the invention, the load packet can be compressed with a packing program suitable for the purpose in order to make the memory space required by the packet as small as possible.

Various techniques for generating compatibility tables suitable for use are known from prior art. However, such compatibility tables have not been stored in the memory of a frequency converter before. Figure 2 shows an exemplary and simplified solution that can be utilized in the invention.

In the exemplary case of Figure 2, it is shown that the version of the control program SW101 of a peripheral device 101 being stored in the memory of the peripheral device 101 is the one having the version identifier 2.1. The device identifier indicating the device version HW101 of the peripheral device is, in turn, 2. The compatibility table 15 shows that, with regard to the peripheral device 101, the version identifier of the control program 11 (SW101) included in the load packet 10 is 2.1. The compatibility table 15 further shows that the version 2.1 of the control program 11 included in the load packet 10 is applicable to peripheral devices whose hardware identifier HW101_Ver is in the range of 1 to 2.

When, in connection with the check, the peripheral device 101 sends the controller of the frequency converter information about the version identifier of its control program SW101 being 2.1, the controller finds out, on the basis of the compatibility table 15, that it is exactly the same compatible version of the control program SW101 that is included in the load packet 10, whereby there is no compatibility problem or need of updating with this peripheral device 101.

When, in connection with the check, a peripheral device 102 sends the controller of the frequency converter information about the version identifier of its control program SW102 being 1.4, the controller finds out, on the basis of the compatibility table 15, that it is not the same version 1.5 of the control program SW102 that is included in the load packet 10. Thus, there is a need of updating for the peripheral device 102. The compatibility table 15 shows that the control program 12 (SW102) included in the load packet 10 is suitable for hardware having the hardware identifier HW102 of 1 to 3. The controller thus finds out that the control program included in the load packet 10 is applicable to the peripheral device 102, due to which the controller can send the program 12 (SW102) included in the load packet 10 to be used by the peripheral device 102.

When, in connection with the check, a peripheral device 103 sends the controller information about the version identifier of its control program SW103 being 4.1, the controller finds out, on the basis of the compatibility table 15, that it is not the same version 5.0 of the control program SW103 that is included in the load packet 10. Thus, there is a need of updating for the peripheral device 103. The compatibility table 15 shows that the control program 13 (SW103) included in the load packet 10 is applicable to hardware having the hardware identifier HW103 of 4 to 6. The controller thus finds out that the control program included in the load packet 10 is not applicable to the peripheral device 103, because the hardware identifier HW103 of the peripheral device is 3. Thus, the updating cannot be carried out automatically, because there would be the risk that the peripheral device might not function correctly after the updating of the control program. With regard to the peripheral device 103, the user of the frequency converter must therefore make a decision on possible updating.

Figure 2 shows that the control program 14 (SW104) for a peripheral device 104 is also included in the load packet 10. Such a peripheral device 104 is, however, not included in the frequency converter in the example. Such a situation may arise with a frequency converter to which optional peripheral devices may be added. If such a peripheral device 104 is later added to the frequency converter, for instance after the converter has been in use for some time, the controller of the converter is capable of automatically programming the added peripheral device 104 by means of a control program that is certainly compatible.

Figure 2 further shows that according to the compatibility table 15 the version identifier of the control program 16 (SW 100) of the controller, included in the load packet 10, is 2.0, and that this version of the control program 16 is suitable for controllers having the hardware identifier HW100 of 1 to 3. Thus, when the load packet is transferred to the frequency converter, it can be ensured that the load packet is compatible with the hardware version of the frequency converter.

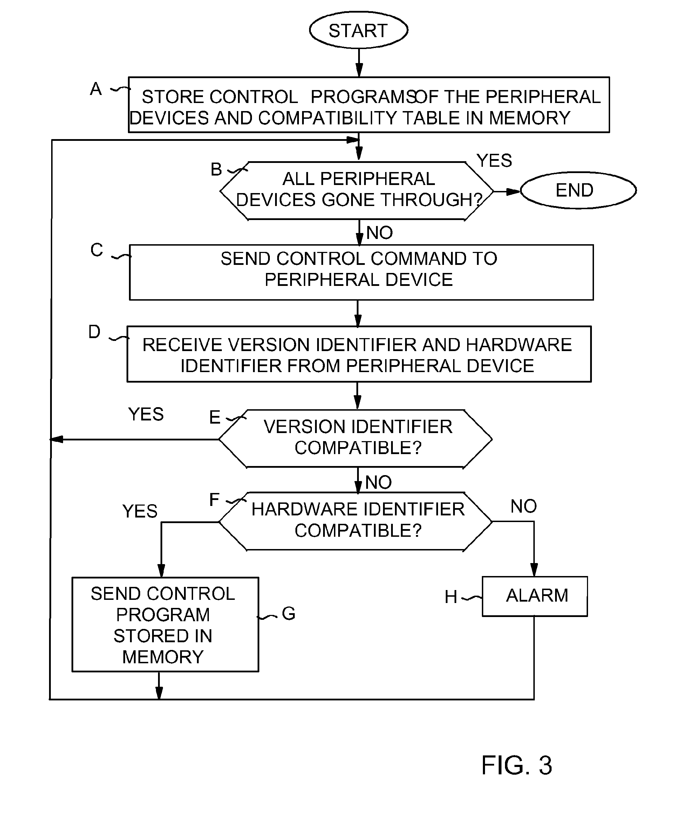

Figure 3 shows a flow chart of a first preferred embodiment of the method according to the invention. The method of Figure 3 is suitable to be used in connection with the frequency converter of Figure 1 and the load packet of Figure 2.

In block A, a load packet, i.e. compatible control programs of the peripheral devices (and possibly of the controller) as well as a compatibility table, is stored in the memory of the frequency converter. In practice, this step is preferably carried out in connection with the manufacture of the frequency converter. However, it is also feasible to carry out the step at a later stage, in which case also the earlier, original load packet may be replaced with a newer updated load packet.

When one moves to block B, the controller of the frequency converter has begun to check the compatibility of the peripheral devices connected to the controller. If all peripheral devices have not yet been checked, one moves to the next peripheral device in turn for checking, to which device a command is sent in block C to obtain the version identifier of the control program stored in the memory of the peripheral device as well as the hardware identifier to be used by the controller. In block D, the version identifier and the hardware identifier are received.

If, in block E, it turns out that the version identifier of the control program is compatible, one returns to block B. If, by contrast, the version identifier is not compatible, it is checked in block F whether the hardware identifier is compatible, in other words whether the compatibility table stored in the memory of the controller shows that the control program included in the load packet for this peripheral device functions in the device version in question. If the hardware identifier is compatible, the control program is updated in block G by sending the control program stored in the memory of the controller for the peripheral device in question to the peripheral device.

If, by contrast, it turns out in block F that the hardware identifier is not compatible, an alarm is given in block H. In practice, this may take place in such a way, for example, that the display of the user interface of the frequency converter informs the user about the compatibility problem observed, after which the user is to decide whether the updating will be carried out. One option in such a case is also to update the load packet of the whole frequency converter and/or the control program of the controller or the peripheral device.

Above it is assumed by way of example, with reference to Figure 3, that it is specifically the controller that successively sends each peripheral device a control command to send the version identifier and the hardware identifier to the controller. Deviating from this, it is also feasible to configure one or more peripheral devices to automatically send these identifiers to the controller in predetermined cases. In such a case, the controller only goes through the identifiers received from different peripheral devices successively, as described above, to ensure the compatibility. One predetermined case in which a peripheral device may send the identifiers to the controller is a starting attempt, i.e. switching on the peripheral device.

The solution according to the invention can be used, for example:

- In connection with manufacture, when frequency converters and their peripheral devices are completed at different times on different production lines. The longer the interval between the completion of different devices, the more probable it is that their software versions are not compatible. This is a great problem in regard of the production logistics. In accordance with the invention, the frequency converter is capable of programming its own peripheral devices in the production, whereby neither separate check nor possible reprogramming by the production is needed. After the factory tests, a load packet comprising a compatible version of the software of all compatible peripheral devices is loaded to the frequency converter. Subsequently, those peripheral devices are connected to the frequency converter which belong to this particular client subscription. When being started now, the frequency converter can, in accordance with the invention, program a compatible piece of software for each connected peripheral device, after which the equipment is ready to be delivered to the client. This brings about great advantages for the production, because the production does not have to be responsible for the compatibility of the software of the peripheral devices and the frequency converter in stock.

- When the client buys a supplementary module for a frequency converter already in use, in which case there is the risk that the software version of the new module may not be compatible with the old frequency converter. This causes a great problem to the client. However, thanks to the invention, adding a new module to a frequency converter does not cause a compatibility problem because, in accordance with the invention, the frequency converter is capable of programming the new module on the spot to correspond to its own software version in connection with the next start-up of the frequency converter. The compatible program version of the supplementary module is found in the load packet in the memory of the frequency converter.

- At failure when a part of the frequency converter or its peripheral device fails and must be replaced with a spare part. In such a case there is the risk that the software version of the spare part may not be compatible with the rest of the entity. This causes a great problem to the maintenance organization. However, thanks to the invention, changing spare parts to a frequency converter in the field does not cause a compatibility problem because, in accordance with the invention, the frequency converter is capable of programming the module on the spot to correspond to its own software version in connection with the next start-up. The compatible program version of the spare part is found in the load packet in the memory of the frequency converter.

- In software updating, in which case there is the risk that the software versions of the peripheral devices of the frequency converter may not be compatible with the new software of the frequency converter. This causes a great problem to the maintenance organization. However, thanks to the invention, software updating of a frequency converter in the field does not cause a compatibility problem because the new program of the frequency converter is a part of a load packet comprising also a compatible software version for all compatible peripheral devices. At the next start-up, the frequency converter can program all peripheral devices itself to correspond to its new software version. The compatible program versions of the peripheral devices are found in the new load packet loaded to the memory of the frequency converter.

It is to be understood that the above description and the attached figures are only intended to illustrate the above invention. Different variations and modifications of the invention will be obvious to a person skilled in the art without there being any deviation from the scope of the invention.

## Claims

1. A controller (1) of a frequency converter, comprising:
an interface (5) via which the controller is connectable to peripheral devices (101 to 103) of the frequency converter, which peripheral devices carry out steps relating to the operation of the frequency converter, controlled by processors (8) of the peripheral devices and control programs stored in memories (9) of the peripheral devices, **characterized in that** the controller (1) of the frequency converter further comprises:
a memory (4) in which are stored compatible versions of control programs (11 to 14) controlling the operation of the peripheral devices (101 to 103) connectable to the controller; and a compatibility table (15) indicating the hardware identifiers and version identifiers of such peripheral devices and control programs with which the control programs stored in the memory (4) are compatible;
a check element (3) which, utilizing the interface (5) and the memory (4), checks specifically for each peripheral device (101 to 103) whether the memory (9) of the peripheral device under the check has such a control program stored in it that, on the basis of the compatibility table (15), is compatible with the control programs stored in the memory; and
an update element (2) responsive to the check element (3) which, when the check element (3) indicates that no compatible program is found in the memory (9) of the peripheral device, retrieves the control program (11 to 14) of the peripheral device from the memory (4) of the controller (1), and sends it via the interface (5) to the peripheral device to be used if the control program (11 to 14) stored in the memory (4) is, on the basis of the hardware identifier of the peripheral device (101 to 103) and the compatibility table (15), compatible with the peripheral device.

2. A controller of a frequency converter according to claim 1, **characterized in that** the update element (2) is responsive to a user interface (101) for retrieving the control program from the memory (4) and for sending it to the peripheral device to be used only when the update element (2) has received a predetermined control command via the user interface (101).

3. A controller of a frequency converter according to claim 1 or 2, **characterized in that** the check element (3) is configured, in response to a start attempt of the frequency converter, to perform the check for the peripheral devices (101 to 103) connected to the frequency converter, and to prevent the starting of the frequency converter before the check element (3) has performed the check for all peripheral devices and the update element (2) has sent the compatible control programs to the peripheral devices indicated by the check element.

4. A peripheral device (101 to 103) of a frequency converter, comprising
an interface (7) via which the peripheral device is connectable to a controller (1) of the frequency converter;
a processor (8); and
a memory (9) in which a control program of the peripheral device is stored; **characterized in**
**that** the peripheral device (101 to 103) is configured to send a hardware identifier and a version identifier of the control program stored in the memory (9) via the interface (7) to the controller (1) of the frequency converter; and
**that** the peripheral device (101 to 103) is responsive to a control program (11 to 14) and a control command received from the controller (1) via the interface (7) for storing the received control program (11 to 14) in the memory (9) of the peripheral device (101 to 103) to be used during the operation of the peripheral device (101 to 103).

5. A method for programming a peripheral device of a frequency converter, **characterized by**
storing (A) in a memory (4) of a controller (1) of the frequency converter control programs of peripheral devices (101 to 103) connectable to the controller, and a compatibility table (15) indicating hardware identifiers of such peripheral devices and version identifiers of such control programs with which the control programs (11 to 14) stored in the memory (4) are compatible;
receiving (D) from the peripheral device the version identifier of the control program stored in its memory (9), and the hardware identifier of the peripheral device;
comparing (E, F) the version identifier and hardware identifier received from the peripheral device (101 to 103) with compatible version identifiers and hardware identifiers indicated by the compatibility table (15); and
sending (G) the control program (11 to 14) stored in the memory (4) for the peripheral device in question to the peripheral device to be used if the comparison shows that the control program stored in the memory (9) of the peripheral device is not compatible but that the control program stored in the memory (4) of the controller (1) is compatible with the peripheral device.

6. A method according to claim 5, **characterized by** sending (C) a control command which causes the peripheral device having received the control command to inform about the version identifier of the control program stored in the memory of the peripheral device and about the hardware identifier of the peripheral device, successively to all peripheral devices (101 to 103) connected to the controller (1) of the frequency converter, in response to a start-up attempt of the frequency converter.

7. A method according to claim 5, **characterized by** sending (C) a control command which causes the peripheral device having received the control command to inform about the version identifier of the control program stored in the memory of the peripheral device and about the hardware identifier of the peripheral device, successively to all peripheral devices (101 to 103) connected to the controller (1) of the frequency converter, in response to a control command received via the interface (101).

8. A program for controlling a controller (1) of a frequency converter, **characterized in that** the program is configured to control (1) the controller:
to receive from a peripheral device (101 to 103) a version identifier of a control program stored in a memory (9) of the peripheral device and a hardware identifier of the peripheral device;
to compare the version identifier and hardware identifier received from the peripheral device (101 to 103) with compatible version identifiers and hardware identifiers indicated by a compatibility table (15) stored in a memory (4); and
to send a control program (11 to 14) stored in the memory (4) of the controller (1) for the peripheral device in question to the peripheral device (101 to 103) to be used if the comparison shows that the control program stored in the memory (9) of the peripheral device is not compatible and that the control program stored in the memory (4) of the controller (1) is compatible with the peripheral device (101 to 103).

9. A program according to claim 8, **characterized in that** the program is further configured to control the controller (1) to send the peripheral device (101 to 103) a control command that causes the peripheral device (101 to 103) having received the control command to inform the controller (1) of the frequency converter about the version identifier of the control program stored in the memory (9) of the peripheral device and the hardware identifier of the peripheral device.
